(19) Europäisches Patentamt

European Patent Office

Office européen des brevets

(11) **EP 0 930 564 B1**

(12) **EUROPEAN PATENT SPECIFICATION**

(45) Date of publication and mention
of the grant of the patent:
**15.11.2006 Bulletin 2006/46**

(51) Int Cl.:
*G06F 9/30* *(2006.01)*     *G06F 9/38* *(2006.01)*
*G06F 7/00* *(2006.01)*     *G06F 9/302* *(2006.01)*
*G06F 7/544* *(2006.01)*

(21) Application number: **98912729.5**

(22) Date of filing: **08.04.1998**

(86) International application number:
**PCT/JP1998/001626**

(87) International publication number:
**WO 1998/045774 (15.10.1998 Gazette 1998/41)**

(54) **Method for performing arithmetic and logical operations in field units of a word operand**

Verfahren zum Ausführen von arithmetischen und logischen Operationen in Feldern eines Wort-Operanden

Procéde pour effectuer des operations arithmétiques et logiques avec des champs d'une opérande

(84) Designated Contracting States:
**DE FR GB**

(30) Priority: **08.04.1997 JP 8975197**

(43) Date of publication of application:
**21.07.1999 Bulletin 1999/29**

(73) Proprietor: **Sony Computer Entertainment Inc.
Tokyo 107-0052 (JP)**

(72) Inventor: **OKA, Masaaki
Sony Computer Entertainment Inc.
Minato-ku
Tokyo 107-0052 (JP)**

(74) Representative: **Pilch, Adam John Michael et al
D Young & Co
120 Holborn
London EC1N 2DY (GB)**

(56) References cited:
EP-A- 0 744 686     EP-A- 0 751 456
EP-A- 0 754 998     EP-A- 0 755 015
JP-A- 5 241 826     JP-A- 7 262 010
JP-A- 8 328 849     JP-A- 9 016 397
US-A- 4 839 845

- GWENNAP L: "ULTRASPARC ADDS MULTIMEDIA INSTRUCTIONS OTHER NEW INSTRUCTIONS HANDLE UNALIGNED AND LITTLE-ENDIAN DATA" MICROPROCESSOR REPORT, XX, XX, 5 December 1994 (1994-12-05), pages 16-18, XP000561690
- NIKKEI ELECTRONICS, No. 661, May 1996, (Tokyo), "Direction of Multi-Media Instruction MMX of 86-Series Microprocessor (in Japanese)", p. 105-119, XP002917103

**Description**

Technical Field

This invention relates to an arithmetic method for carrying out an arithmetic and logical operation.

Among CPUs (Central Processing Units) which are arithmetic units (arithmetic and logic units) used for computer, etc., there are some arithmetic units having a group of instructions called multimedia instruction (hereinafter referred to as MM instruction or simply referred to as instruction). This MM instruction serves to divide area of arithmetic (computing) element that CPU has to execute plural operations at the same time.

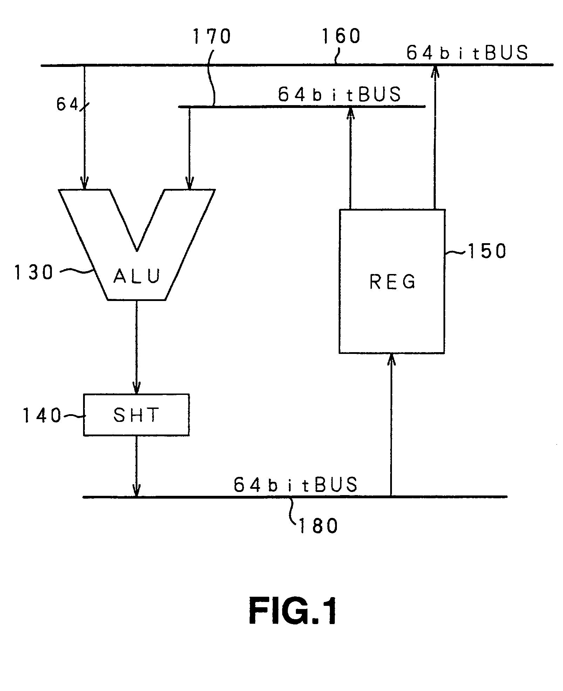

An example of the configuration of a conventional CPU is shown in FIG. 1. This conventional CPU comprises an arithmetic and logic unit (ALU) 130 serving as arithmetic and logic means for executing data processing, a shift processing unit (SHT) 140 serving as shift processing means for shifting data in left and right directions, and a register unit (REG) 150, wherein those units are connected to, e.g., buses 160, 170, 180 of 64 bits to mutually transfer data.

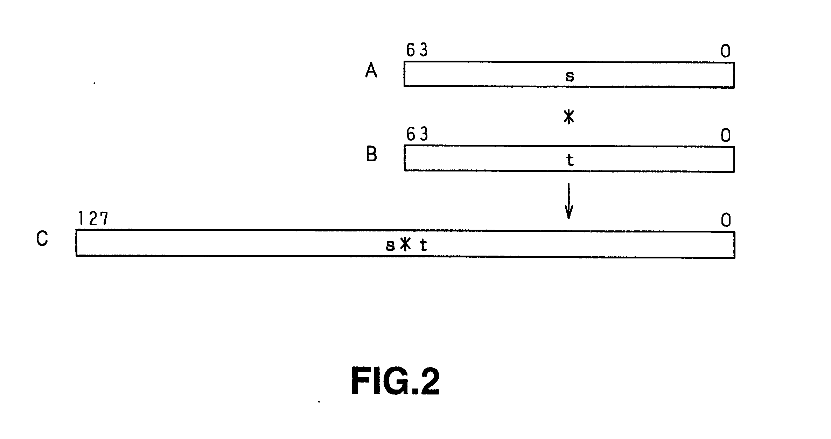

FIG. 2 shows multiplication by multiplier of 64 bits x 64 bits in the above-described conventional CPU. Namely, word s*t of 128 bits, which is product of word s of 64 bits of register A and word t of 64 bits of register B, is generated and is stored into register C.

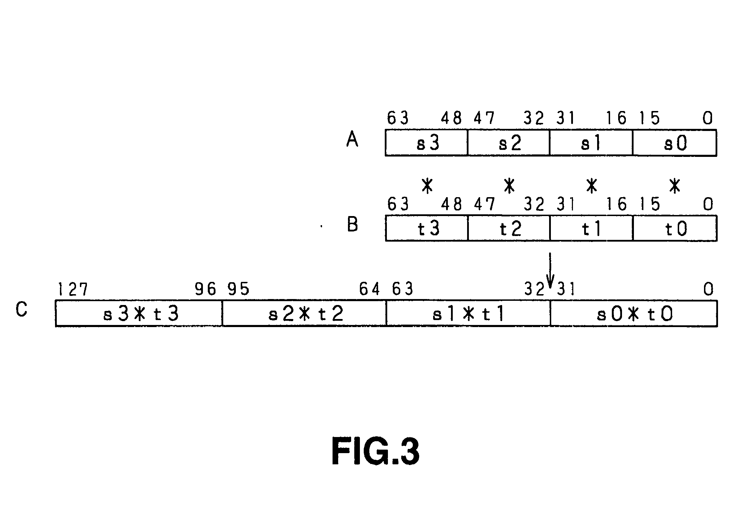

FIG. 3 shows the state where the above-mentioned 64 bit words s and t are respectively divided into four fields to form respective four bit fields to carry out multiplication of bits of corresponding fields, i.e., 16 bits x 16 bits. Namely, s0*t0, s1*t1, s2*t2 and s3*t3 respectively consisting of 32 bits which are products of respective 16 bits s0, s1, s2, s3 of the register A and respective 16 bits t0, t1, t2, t3 of the register B are generated and are stored into the register C.

Such four parallel multiplication can be realized by quartering the multiplier that CPU has to constitute multipliers of four parallel. In addition, similarly to the above, adder that CPU has may be also quartered to constitute four parallel adders.

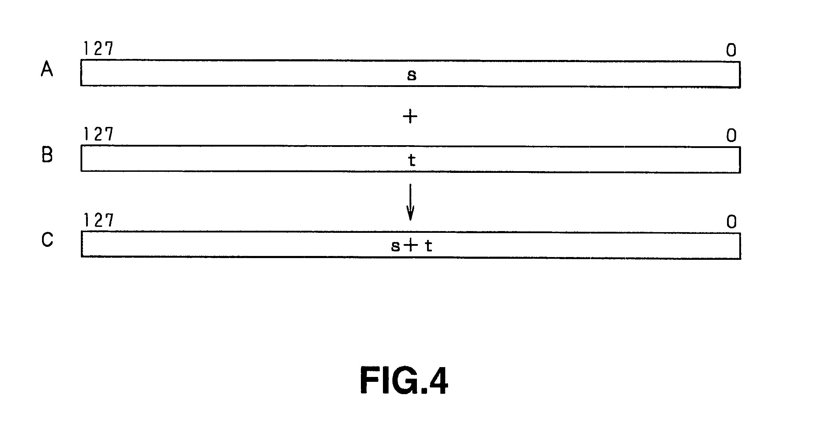

FIG. 4 shows addition by adder of 128 bits + 128 bits in the above-described conventional CPU. Namely, 128 bits s+t which are sum of respective 128 bits s of register A and respective 128 bits t of register B are generated and are stored into register C.

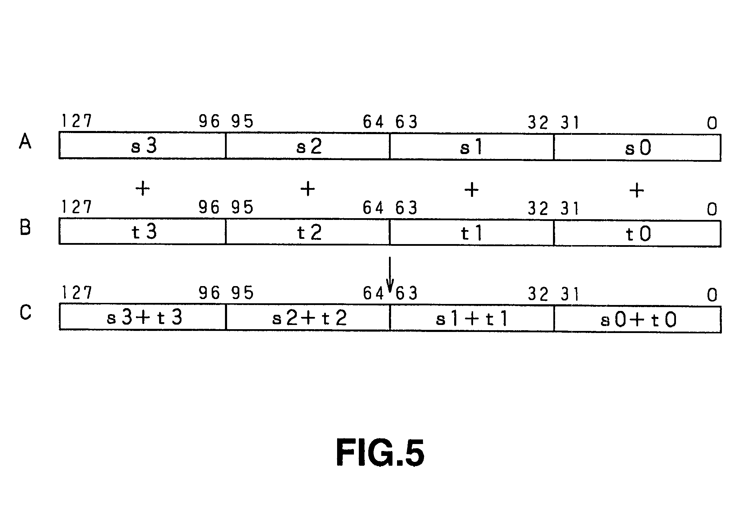

FIG. 5 shows the state where the above-mentioned respective words are quartered to carry out additions of respective 32 bits + respective 32 bits. Namely, s0+t0, s1+t1, s2+t2 and s3+t3 respectively consisting of 32 bits which are sums of respective 32 bits s0, s1, s2, s3 of the register A and respective 32 bits t0, t1, t2, t3 of the register B are generated and are stored into the register C.

When data width subject to operation is about 16 bits or 32 bits as stated above, if parallel arithmetic (computing) elements constituted by dividing single arithmetic (computing) element are used, it is possible to carry out arithmetic processing at a high speed. Instructions for carrying out parallel operation shown in FIGS. 3 and 5 are a portion of multimedia (MM) instructions used therefor.

A more practical example of conventional parallel operation using MM instruction is indicated below.

Initially, explanation will be given in connection with the case where n+1 simultaneous linear equations as indicated by the following equation (1) are solved by using the Cramer's formula.

$$a_{00}X_0 + a_{01}X_1 + \cdots + a_{0n}X_n = b_0$$

$$a_{10}X_0 + a_{11}X_1 + \cdots + a_{1n}X_n = b_1 \qquad \cdots(1)$$

$$\cdots$$

$$a_{n0}X_0 + a_{n1}X_1 + \cdots + a_{nn}X_n = b_n$$

$$X_j = \begin{vmatrix} a_{00} \cdots & b_0 \cdots & a_{0n} \\ \vdots & \vdots & \vdots \\ a_{n0} \cdots & b_n \cdots & a_{nn} \end{vmatrix} \Bigg/ \begin{vmatrix} a_{00} \cdots\cdots & a_{0n} \\ \vdots & \vdots \\ a_{n0} \cdots\cdots & a_{nn} \end{vmatrix} \quad (0 \le j \le n) \qquad \cdots(2)$$

The j-th column is
replaced by

$$\begin{bmatrix} b_0 \\ b_1 \\ \vdots \\ b_n \end{bmatrix}$$

When this Cramer's formula is used, j-th columns of (n+1) x (n+1) determinant are replaced in order as indicated by the above-mentioned equation (2), thereby making it possible to obtain solutions of the simultaneous linear equations of the equation (1). Namely, if the determinant can be calculated, it is possible to solve the simultaneous linear equations.
In general, the (n+1) x (n+1) determinant is expanded as indicated by the equation (3) by using small determinant having degree lower than n+1. In this case, $\Delta_{ij}$ is expression in which sign given by $(-1)^{i+j}$ is attached to the representation obtained by removing, from the (n+1) x (n+1) determinant, the i-th row and the j-th column thereof.

$$\begin{vmatrix} a_{00} & \cdots\cdots & a_{0n} \\ \vdots & & \vdots \\ a_{n0} & \cdots\cdots & a_{nn} \end{vmatrix} = a_{0j}\Delta_{0j} + a_{1j}\Delta_{1j} + \cdots\cdots + a_{nj}\Delta_{nj}$$

Removal of the j-th column                                            $\cdots$(3)

$$\Delta_{ij} = (-1)^{i+j}\begin{vmatrix} a_{00} & \cdots & \vdots & \cdots & a_{0n} \\ \cdots\cdots & & \vdots & & \cdots\cdots \\ a_{n0} & \cdots & \vdots & \cdots & a_{nn} \end{vmatrix}$$ Removal of the i-th row

Namely, if small determinants having lower degree are calculated in order, the original determinant can be calculated. Accordingly, if 2x2 determinant which is the determinant of the lowest degree can be calculated, determinant of arbitrary degree can be similarly calculated. In order to calculate 2x2 determinant, it is sufficient to use expansion indicated by the equation (4).

$$\begin{vmatrix} a_{00} & a_{01} \\ a_{10} & a_{11} \end{vmatrix} = a_{00} * a_{11} - a_{01} * a_{10}$$

$\cdots$ (4)

Moreover, in the case of calculating the determinant of 3x3 matrix, expansion indicated by the equation (3) is rewritten into the equation (5).

$$\begin{vmatrix} a_{00} & a_{01} & a_{02} \\ a_{10} & a_{11} & a_{12} \\ a_{20} & a_{21} & a_{22} \end{vmatrix} = a_{00} \begin{vmatrix} a_{11} & a_{12} \\ a_{21} & a_{22} \end{vmatrix} - a_{10} \begin{vmatrix} a_{01} & a_{02} \\ a_{21} & a_{22} \end{vmatrix} + a_{20} \begin{vmatrix} a_{01} & a_{02} \\ a_{11} & a_{12} \end{vmatrix}$$

$$\cdots (5)$$

FIG. 6 shows the state where respective row vectors (a00, a01, a02), (a10, a11, a12), (a20, a21, a22) of 3x3 matrix are stored into registers A0, A1, A2 respectively as 64 bits. The procedure for calculating small determinant of 2x2 by using conventional MM instructions with respect to row vectors stored in this way will be described below.

FIG. 7 shows the procedure for calculating small determinant of 2x2 by using conventional MM instruction with respect to row vectors of 3x3 matrix of FIG. 6.

Initially, row vector stored in register A1 is shifted by 16 bits to the right by instruction "SRL B, A1, 16", and is stored into register B.

Then, product (AND) of the above-mentioned row vector stored in the register B and 000000000000ffff is generated by instruction "ANDIB, Ox000000000000ffff", and is stored into the register B for a second time. Thus, only a11 is stored into 16 bits of low order of bit 0 to bit 15 of the register B.

Then, row vector stored in the register A1 is shifted by 16 bits to the left by instruction "SLL C, A1, 16", and is stored into register C.

Then, product (AND) of the above-mentioned row vector stored in the register C and 00000000ffff0000 is generated by instruction "ANDI C, 0x00000000ffff0000", and is stored into the register C for a second time. Thus, only a12 is stored into 16 bits of bit 16 to bit 31 of the register C.

Then, sum (OR) of data stored in the register B and data stored in the register C is generated by instruction "OR D, B, C", and is stored into register D. Thus, a12, a11 are stored into 32 bits of low order of the register D.

Then, row vector stored in the register A0 and data stored in the register D are multiplied in parallel by instruction "PMUL E, A0, D", and its result is stored into register E. Namely, a0 1*a12 is stored into 32 bits of high order of the register E, and a02*a11 is stored into 32 bits of low order thereof.

Then, data stored in the register E is shifted by 32 bits to the right by instruction "SRL F, E, 32", and is stored into register F. Namely, only a01*a12 is stored into 32 bits of low order of the register F.

Then, product (AND) of the above-mentioned data stored in the register E and 00000000ffffffff is generated by instruction "ANDI E, 0x00000000ffffffff", and is stored into the register E for a second time. Thus, only a02*a11 is stored into 32 bits of low order of the register E.

Then, by instruction "SUB G, F, E", data stored in the register E is subtracted from data stored in the register F so that its difference is generated. The difference thus obtained is stored into register G. Thus, determinant a01*a12 - a02*a11 of 2x2 matrix is stored into 32 bits of low order of the register G.

As stated above, in the case where conventional MM instructions are used to calculate determinant of 2x2 matrix, the above-mentioned 9 (nine) steps were required.

Explanation will be given in connection with the case where normal (vector) of triangle is determined as a second more practical example in which the conventional MM instructions are used to carry out parallel operation.

Three points of the three-dimensional space determine one triangle. Moreover, area of triangle and normal vector are given by absolute value of outer product vector and normalization vector. Outer product of such two three-dimensional vectors is three-dimensional vector given by the equation (6).

$$(a_{00}\, a_{01}\, a_{02}) \times (a_{10}\, a_{11}\, a_{12})$$

$$= \left( \begin{vmatrix} a_{01} & a_{02} \\ a_{11} & a_{12} \end{vmatrix} \begin{vmatrix} a_{02} & a_{00} \\ a_{12} & a_{10} \end{vmatrix} \begin{vmatrix} a_{00} & a_{01} \\ a_{10} & a_{11} \end{vmatrix} \right) \quad \cdots (6)$$

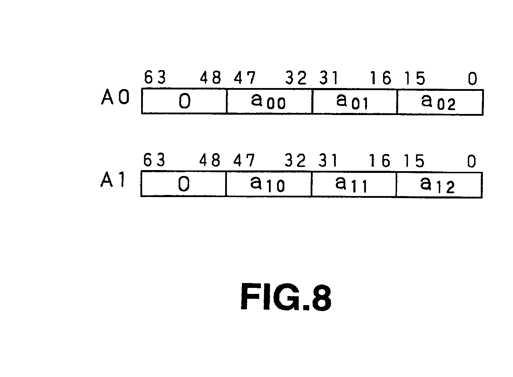

FIG. 8 shows the state where two three-dimensional vectors (a00, a01, a02), (a10, a11, a12) are stored in registers A0, A1 as two words respectively consisting of 64 bits. Explanation will be given below in connection with the procedure for calculating outer product by using the conventional MM instructions with respect to two three-dimensional vectors stored in this way.

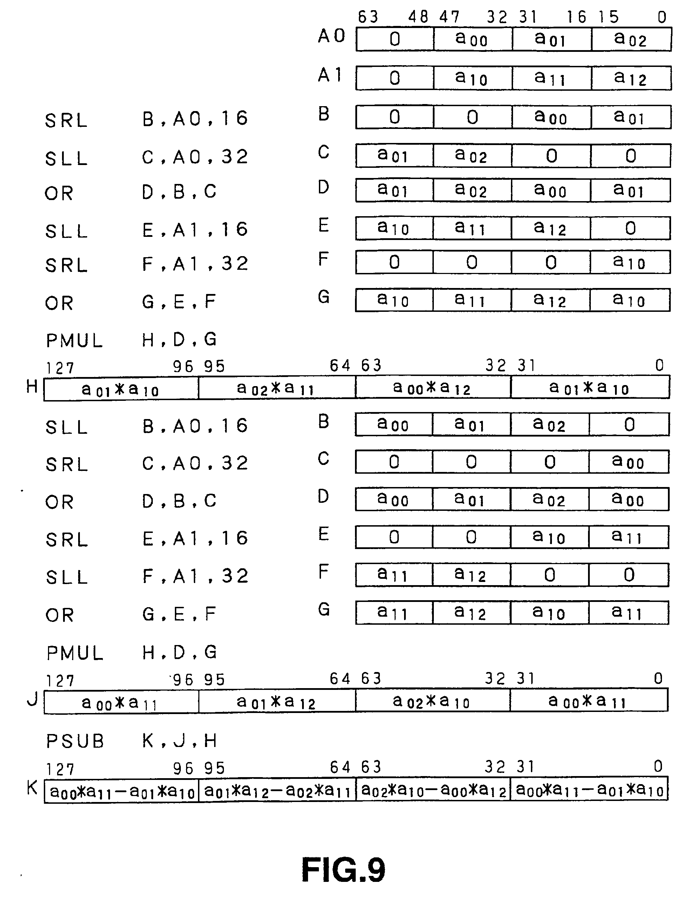

FIG. 9 shows the procedure for calculating outer product by using the conventional MM instructions with respect to two three-dimensional vectors of FIG. 8.

Initially, row vector stored in the register AO is shifted by 16 bits to the right by instruction "SRL B, AO, 16", and is stored into register B.

Then, row vector stored in the register A0 is shifted by 32 bits to the left by instruction "SLL C, AO, 32", and is stored into register C.

Then, sum (OR) of data stored in the register B and data stored in the register C is generated by instruction "OR D, B, C", and is stored into register D. Thus, a01, a02, a00, a01 respectively consisting of 16 bits are stored into the register D.

Then, row vector stored in the register A1 is shifted by 16 bits to the left by instruction "SLL E, A1, 16", and is stored into register E.

Then, row vector stored in the register A1 is shifted by 32 bits to the right by instruction "SRL F, A1, 32", and is stored into the register F.

Then, sum (OR) of data stored in the register E and data stored in the register F is generated by instruction "OR G, E, F", and is stored into register G. Thus, a10, a11, a12, a10 respectively consisting of 16 bits are stored into the register G.

Then, data stored in the register D and data stored in the register G are multiplied in parallel by instruction "PMUL H, D, G", and its result is stored into register H. Namely, a01*a10, a02*a11, a00*a12, a01*a10 respectively consisting of 32 bits are stored into register H.

Then, row vector stored in the register A0 is shifted by 16 bits to the left by instruction "SLL B, A0, 16", and is stored into register B.

Then, row vector stored in the register A0 is shifted by 32 bits to the right by instruction "SRL C, A0, 32", and is stored into register C.

Then, sum (OR) of data stored in the register B and data stored in the register C is generated by instruction "OR D, B, C", and is stored into register D. Thus, a00, a01, a02, a00 respectively consisting of 16 bits are stored into the register D.

Then, row vector stored in the register A1 is shifted by 16 bits to the right by instruction "SRL E, A1, 16", and is stored into register E.

Then, row vector stored in the register A1 is shifted by 32 bits to the left by instruction "SLL F, A1, 32", and is stored into register F.

Then, sum (OR) of data stored in the register E and data stored in the register F is generated by instruction "OR G, E, F", and is stored into register G. Thus, a11, a12, a10, a11 respectively consisting of 16 bits are stored into the register G.

Then, data stored in the register D and data stored in the register G are multiplied in parallel by instruction "PMUL J, D, G", and its result is stored into register J. Namely, a00*a11, a01*a12, a02*a10, a00*a11 respectively consisting of 32 bits are stored into the register J.

Then, data stored in the register H is subtracted in parallel from data stored in the register J by instruction "PSUB K, J, H", and its result is stored into register K. Namely, a00*a11 - a01*a10, a01*a12 - a02*a11, a02*a10 - a00*a12, a00*a11 - a10*a10 respectively consisting of 32 bits are stored into the register K.

As stated above, in the case where the conventional MM instructions are used to calculate outer product of two three-dimensional vectors, the above-mentioned 15 steps were required.

Explanation will now be given in connection with the case of calculating inner product of two vectors as a third more practical example in which the conventional MM instructions are used to carry out parallel operation.

Inner product of two vectors represents degree of correlation therebetween. As such inner product of two vectors, inner product of, e.g., two four-dimensional vectors is given by the equation (7).

$$(a_0 \ a_1 \ a_2 \ a_3) * (b_0 \ b_1 \ b_2 \ b_3)$$

$$= a_0 {}^* b_0 + a_1 {}^* b_1 + a_2 {}^* b_2 + a_3 {}^* b_3 \quad \cdots (7)$$

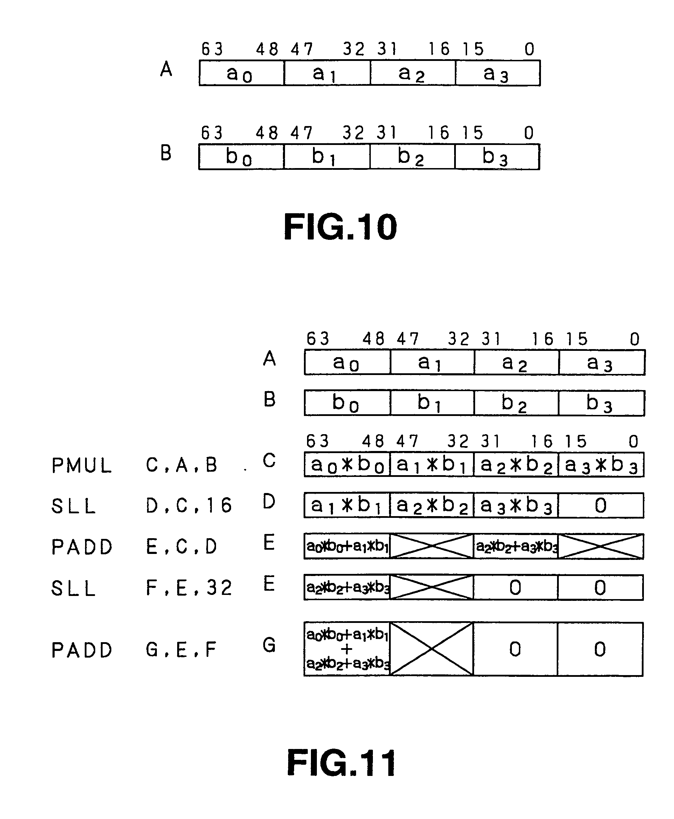

FIG. 10 shows the state where two four-dimensional vectors (a0, a1, a2, a3), (b0, b1, b2, b3) of 64 bit word are respectively stored into registers A, B as two words. Explanation will be given below in connection with the procedure for calculating inner product by using conventional MM instructions with respect to two four-dimensional vectors stored in this way.

FIG. 11 shows procedure for calculating inner product by using conventional MM instructions with respect to two four-dimensional vectors of FIG. 10. In this example, the portions labeled mark x indicate that values irrelevant to this operation are stored.

Initially, data stored in register A and data stored in register B are multiplied in parallel by instruction "PMUL C, A, B", and its result is stored into register C. Namely, a0*b0, a1*b1, a2*b2, a3*b3 respectively consisting of 16 bits are stored into the register C.

Then, data stored in the register C is shifted by 16 bits to the left by instruction "SLL D, C, 16", and is stored into register D.

Then, data stored in the register C and data stored in the register D are added in parallel by instruction "PADD E, C, D", and its result is stored into register E. Thus, within the register E, a2*b2 + a3*b3 of 16 bits are stored into bit 16 to bit 31, and a0*b0 + a1*b1 of 16 bits are stored into bit 48 to bit 63.

Then, data stored in the register E is shifted by 32 bits to the left by instruction "SLL F, E, 32", and is stored into register F. Thus, within the register F, only a2*b2 + a3*b3 are stored into the Most Significant 16 bits, and two data values of 16 bits of low order both become equal to zero.

Then, data stored in the register E and data stored in the register F are added in parallel by instruction "PADD G, E, F", and its result is stored into register G. Thus, within the register G, a0*b0 + a1*b1 + a2*b2 + a3*b3 are stored into the Most Significant 16 bits, and $a_2 {}^* b_2 + a_3 {}^* b_3$ are stored into bit 16 to bit 31.

As stated above, in the case where the conventional MM instructions are used to calculate inner product of two four-dimensional vectors, the above-mentioned 5 steps were required.

Meanwhile, in the arithmetic apparatus and the arithmetic method using conventional MM instructions, while data of plural fields of n bits are stored in the register, operation is performed only between the same (corresponding) bit fields of these fields. Namely, since arithmetic operation cannot be directly implemented between fields within word subject to operation consisting of plural fields, there took place necessity of carrying out extra field operation for performing operation between desired fields in carrying out parallel operation as described above, thus failing to cause the operation speed to be sufficiently high.

This invention has been made in view of the above-described problems and its object is to provide an arithmetic method which can perform parallel operation at a high speed with the number of steps lesser than that of the conventional arithmetic apparatus.

European Patent application Publication No EP-A-0 744 686 discloses an arithmetic method generally according to the pre-characterising part of claim 1 thereof.

The present invention provides an arithmetic method as set forth in claim 1 hereof.

In accordance with the arithmetic method of the invention, since there is no necessity of carrying out an extra field operation, it is possible to perform parallel operation at a high speed by a number of steps lesser than that of the prior art.

The invention will now be further described, by way of illustrative example, with reference to the accompanying drawings, in which:

FIG. 1 is a view showing an example of the configuration of conventional CPU.
FIG. 2 is a view for explaining multiplication by multiplier of 64 bits x 64 bits.
FIG. 3 is a view for explaining parallel multiplication by quartered multiplier of 64 bits x 64 bits.
FIG. 4 is a view for explaining addition by adder of 64 bits x 64 bits.
FIG. 5 is a view for explaining parallel addition by quartered adder of 64 bits x 64 bits.

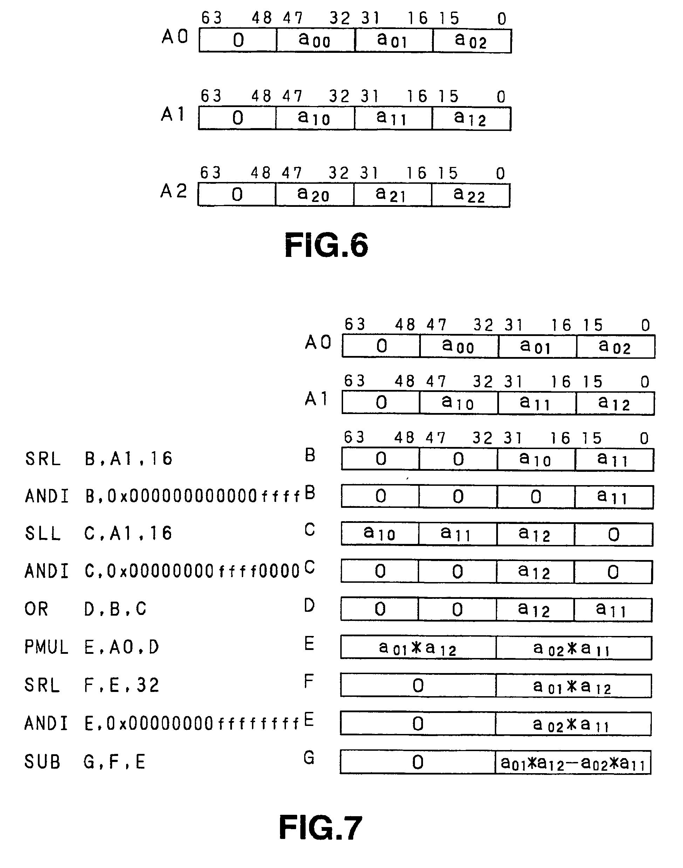

FIG. 6 is a view showing the state where row vectors of 3x3 matrix are stored in registers respectively as 64 bit words.
FIG. 7 is a view showing the procedure for calculating small determinant of 2x2 by using conventional MM instructions with respect to row vectors of 3x3 matrix.
FIG. 8 is a view showing the state where two three-dimensional vectors are stored in registers respectively as words of 64 bits.
FIG. 9 is a view showing the procedure for calculating outer product by using conventional MM instructions with respect to two three-dimensional vectors.

FIG. 10 is a view showing the state where two four-dimensional vectors are stored in registers respectively as two words.

FIG. 11 is a view showing the procedure for calculating inner product by using conventional MM instructions with respect to two four-dimensional vectors.

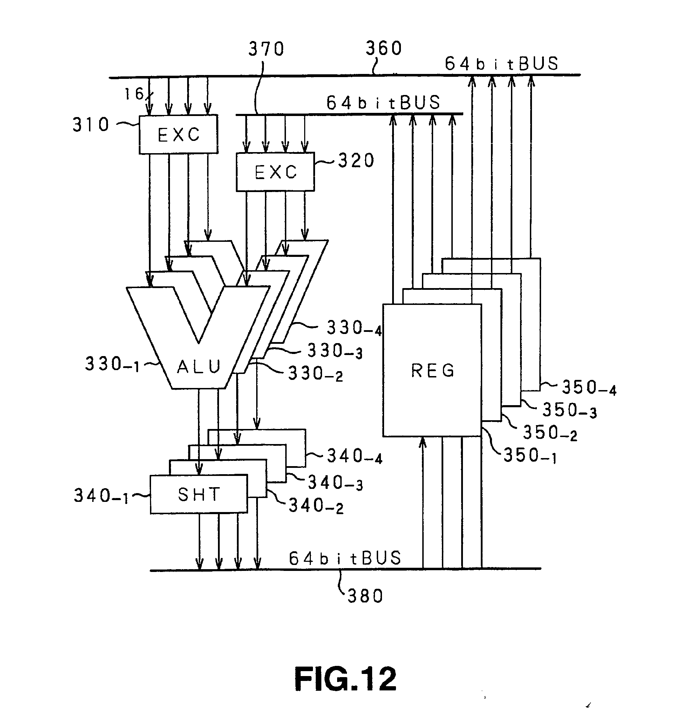

FIG. 12 is a view showing an example of the configuration of CPU which is one form of an arithmetic apparatus for carrying out a method in accordance with this invention.

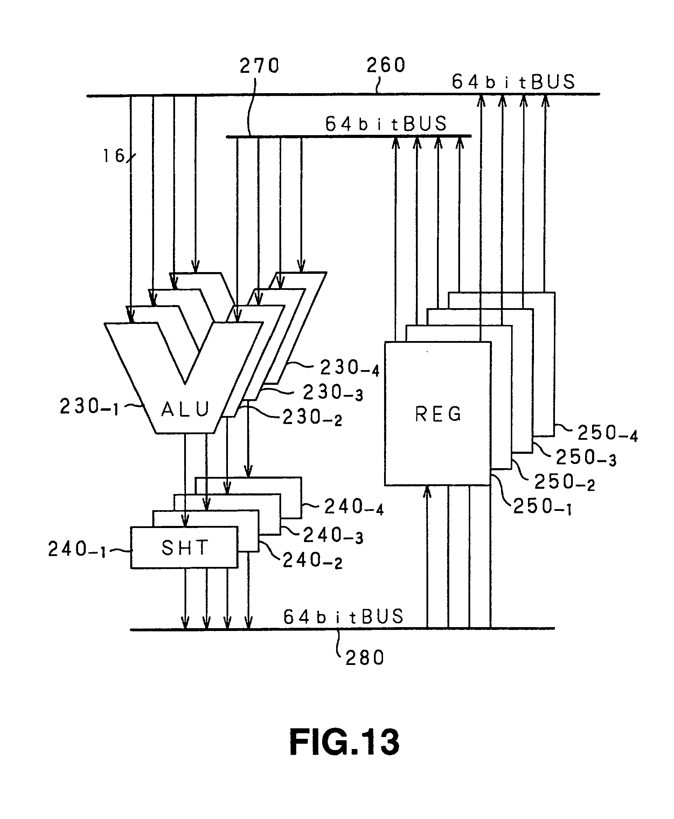

FIG. 13 is a view showing an example of fundamental configuration of CPU having MM instructions.

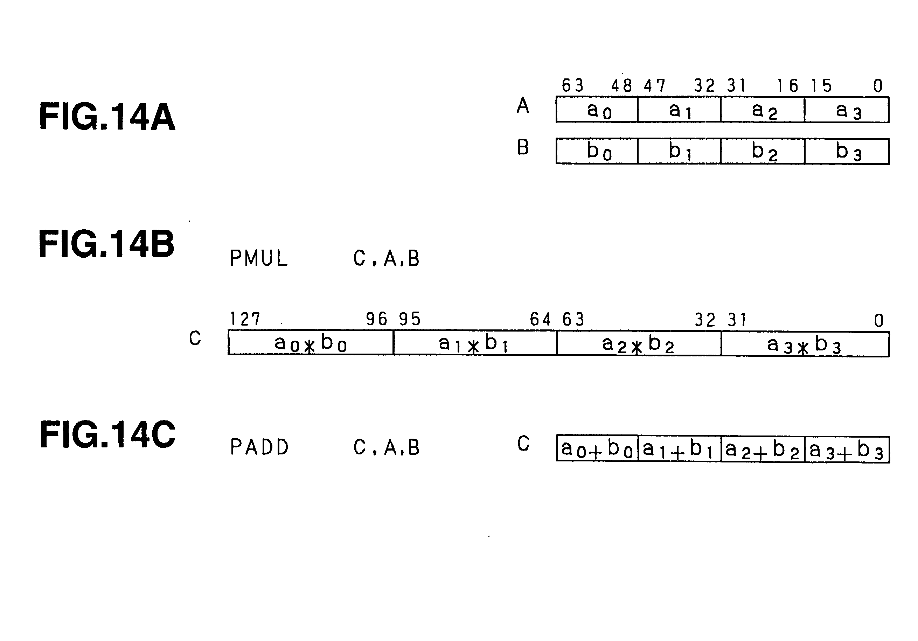

FIGS. 14A, B, C are views for explaining instructions "PMUL" and "PADD".

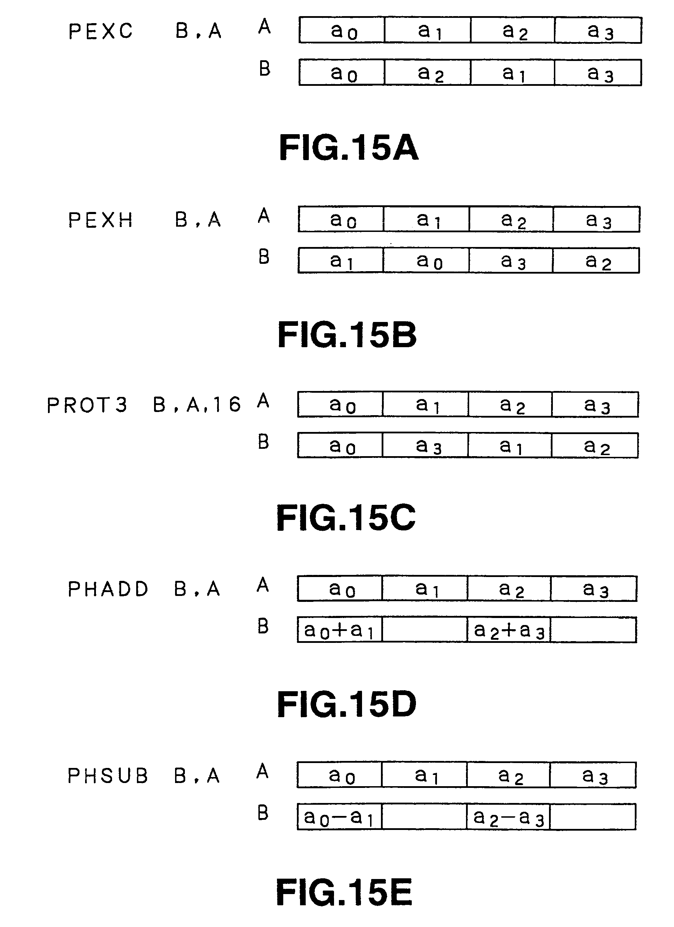

FIGS. 15A to E are views for explaining MM instructions of the arithmetic apparatus of this invention.

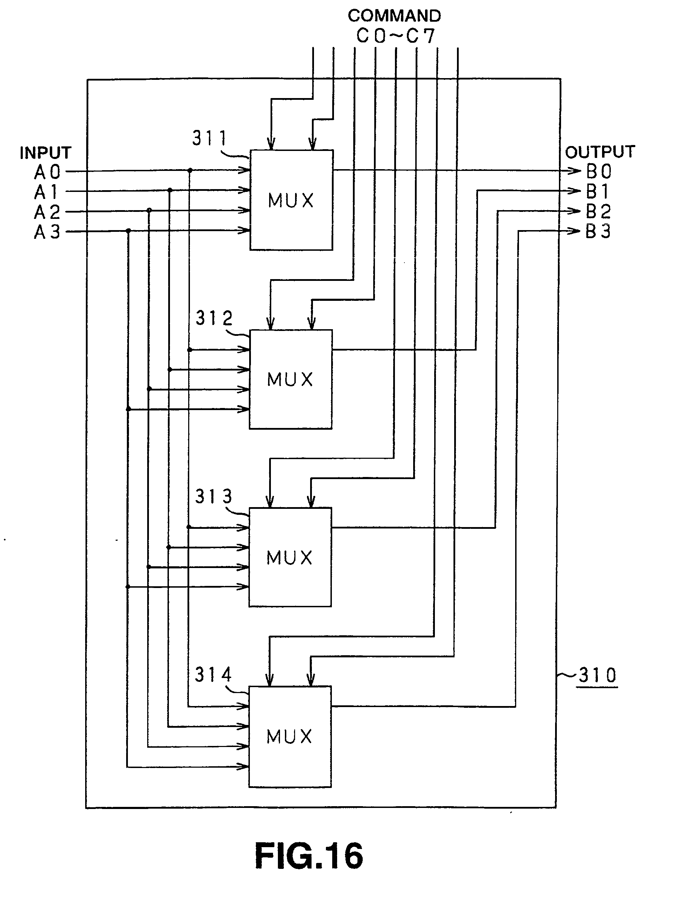

FIG. 16 is a view showing an example of the configuration of data exchange unit (EXC circuit).

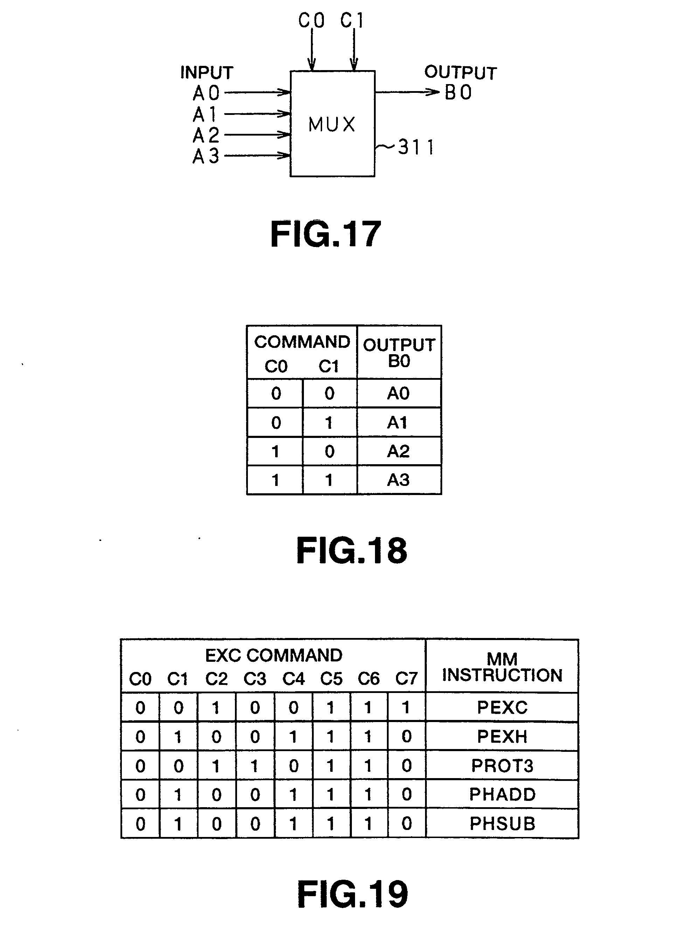

FIG. 17 is a view for explaining multiplexer (MUX) of the EXC circuit.

FIG. 18 is a view showing two commands sent to the MUX and the operation thereof.

FIG. 19 is a view showing correspondence relationship between EXC command sent to the EXC circuit and MM instruction to be realized.

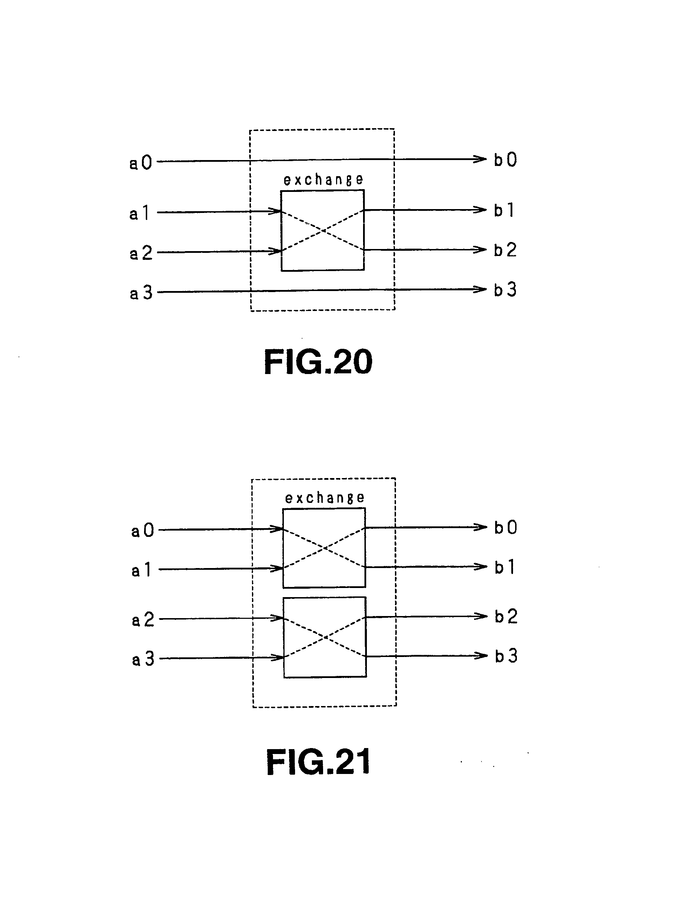

FIG. 20 is a view showing a circuit for realizing instruction "PEXC".

FIG. 21 is a view showing a circuit for realizing instruction "PEXH".

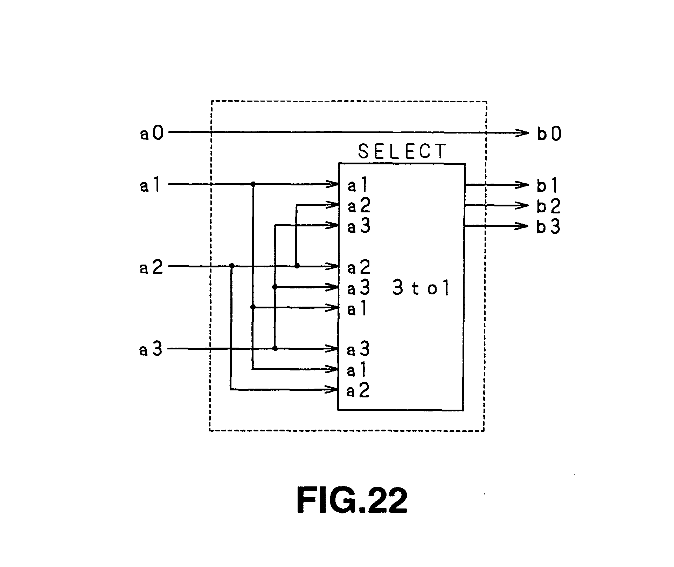

FIG. 22 is a view showing a circuit for realizing instruction "PROT3".

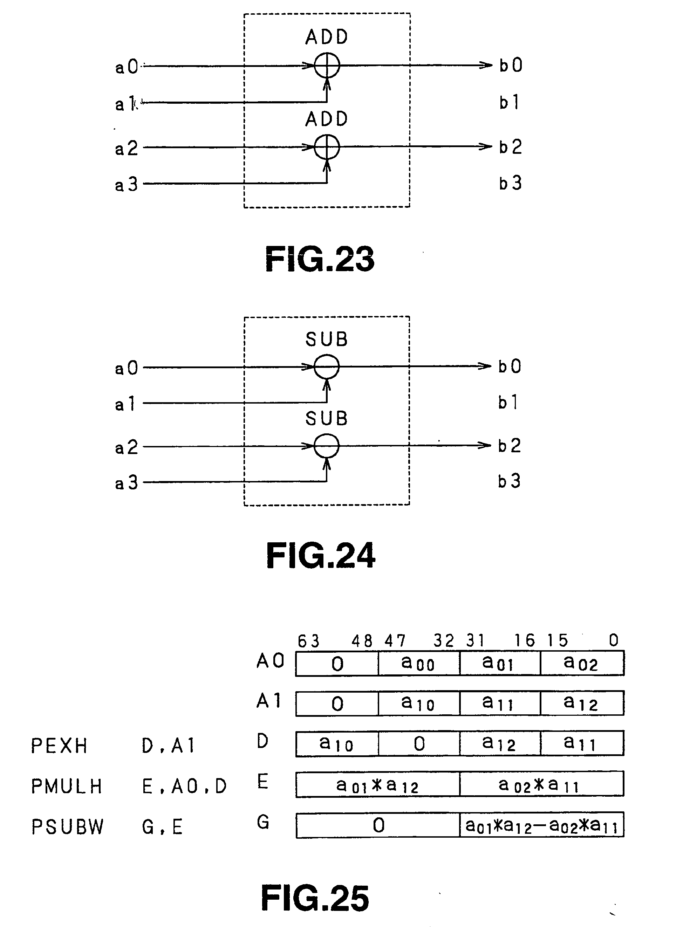

FIG. 23 is a view showing a circuit for realizing instruction "PHADD".

FIG. 24 is a view showing a circuit for realizing instruction "PHSUB".

FIG. 25 is a view showing procedure for calculating, by the arithmetic apparatus for carrying out a method in accordance with this invention, small determinant of 2x2 with respect to row vectors of 3x3 matrix respectively stored.

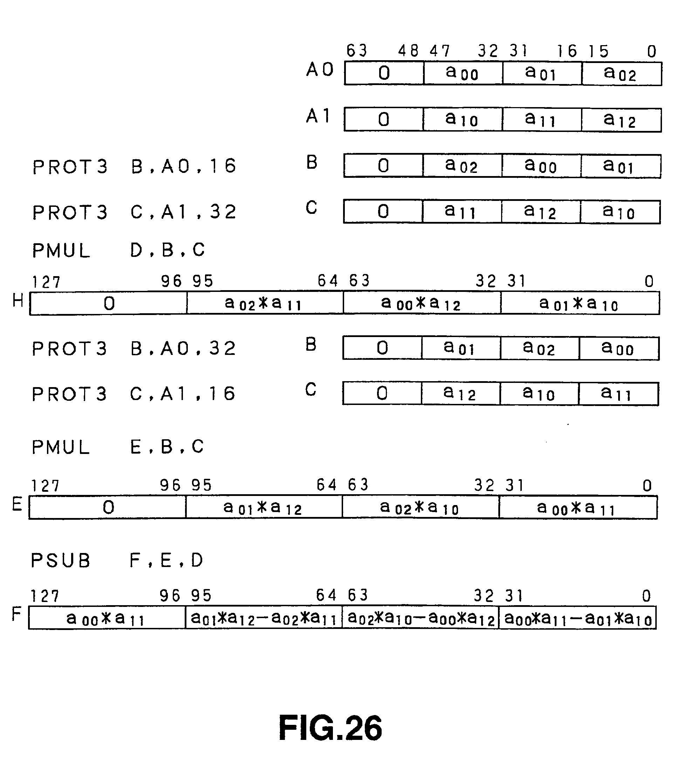

FIG. 26 is a view showing procedure for calculating outer product with respect to two three-dimensional vectors by the arithmetic apparatus for carrying out a method in accordance with this invention.

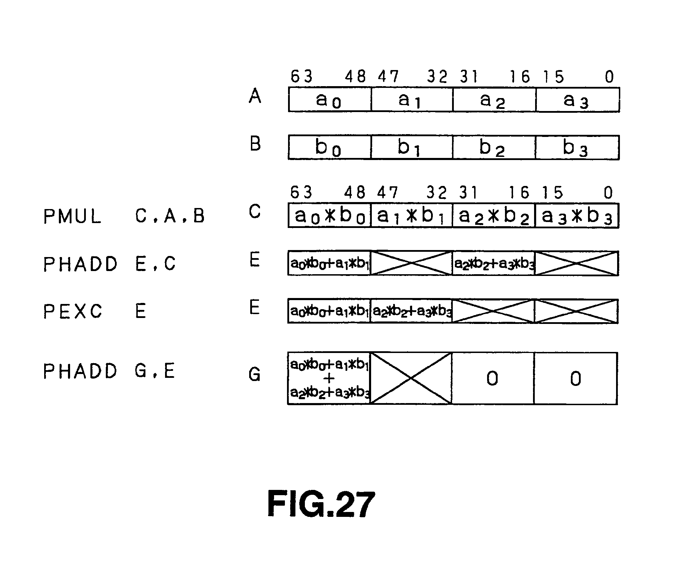

FIG. 27 is a view showing procedure for calculating inner product with respect to two four-dimensional vectors by the arithmetic apparatus for carrying out a method in accordance with this invention.

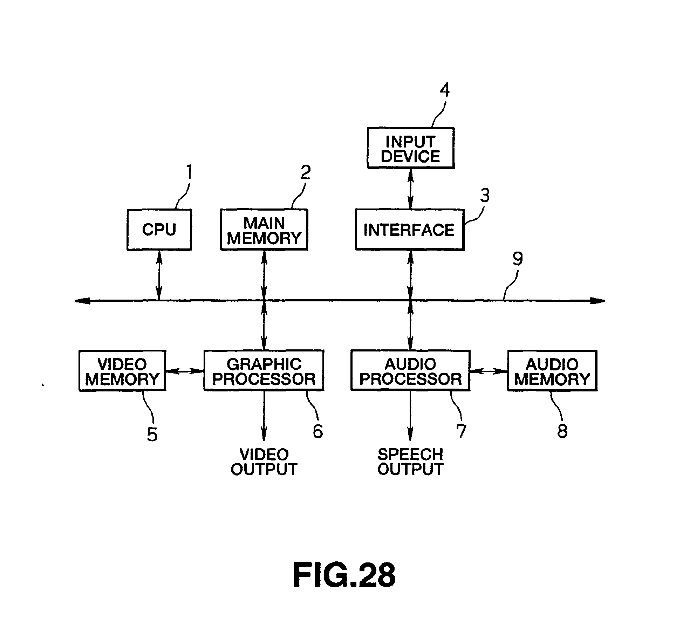

FIG. 28 is a block diagram showing an example of the configuration of preparation apparatus to which the arithmetic unit (apparatus) for carrying out a method according to this invention is applied.

Preferred embodiments of an arithmetic method of this invention will be described below with reference to the attached drawings. In the following description, the configuration of the embodiment of the arithmetic apparatus for carrying out a method in accordance with this invention will be first explained and the embodiment of the arithmetic method of this invention will be explained with reference to that configuration.

FIG. 12 shows an example of the configuration of the main part of CPU as one embodiment of the arithmetic apparatus for carrying out a method in accordance with this invention. This CPU is of the configuration comprising an arithmetic and logic unit (ALU) 330 serving as arithmetic and logic means, a shift processing unit (SHT) 340, and a register unit (REG) 350, wherein these units can mutually transfer data through buses (BUS) 360, 370, 380 of 64 bits and parallel buses of 16 bits. The above-mentioned ALU 330, the SHT 340 and the REG 350 are of the configuration in which they are respectively divided into four sections.

While the above-mentioned respective components have configuration similar to the respective portions of the CPU shown in FIG. 13, the former differs from the latter in that the former comprises data exchange units (EXC) 310, 320 serving as bit field exchange means within word. Namely, by the EXCs 310, 320 serving as bit field exchange means within this word, there is realized arithmetic (computational) function to perform operation between plural fields within the same word subject to operation at the ALU 330. In this example, one field consists of M bits ($M \geq 1$). In the embodiment described below, one field is caused to be, e.g., 16 bits.

Prior to explanation with respect to new MM instructions that the above-described arithmetic apparatus of this invention has, "PMUL" and "PADD" which are previously described MM instructions will be described for a second time with reference to an example of the configuration of the Central Processing unit (CPU) which is essential point of the arithmetic unit (apparatus) for carrying out the method in accordance with this invention.

FIG. 13 shows an example of the fundamental configuration of CPU having MM instructions. This example of the configuration of the CPU having MM instructions is based on the example of the configuration of the conventional CPU which has not new MM instructions shown in FIG. 1, but differs from the latter in that an ALU 230, a SHT 240 and a REG 250 are respectively divided into four sections.

Further, as data transfer path between a bus 260 and the ALU 230, four 16 bit parallel transfer paths 265 are provided in place of parallel transfer paths of 64 bits.

FIG. 14A to C show MM instructions "PMUL" and "PADD" executed at the arithmetic unit of FIG. 13.

FIG. 14A shows the state where data of respective 16 bits are respectively stored into quartered respective fields of 16 bits of 64 bit registers A, B of the REG 250.

FIG. 14B shows the state where four data individually stored in four fields of the register A and four data stored in the register B are multiplied in parallel at the ALU 230 by instruction "PMUL C, A, B", and products respectively consisting of 32 bits are stored into register C of the REG 250.

Moreover, FIG. 14C shows the state where four data stored in the register A and four data stored in the register B are added in parallel by instruction "PADD C, A, B" and sums respectively consisting of 16 bits are stored into register C.

However, operations by MM instructions as described above in the arithmetic unit of FIG. 13 are carried out in word units, and the number of steps was additionally required for the purpose of performing operation in field units. In view of the above, the arithmetic unit for carrying out the method in accordance with this invention is caused to be of the configuration further including "bit field exchange instruction within the word" and "operation instruction between data within the word" which are new MM instructions and adapted for performing operation by lesser number of steps.

The group of MM instructions of the arithmetic unit (apparatus) for carrying out the method in accordance with this invention will now be described with reference to FIG. 15A to E.

FIG. 15A shows instruction "PEXC". Namely, the instruction "PEXC B, A" serves to exchange, in the state where data of the Most Significant field and data of the Least Significant field of quartered register A are caused to remain as they are, data of two fields at the central portion therebetween to store them into register B.

FIG. 15B shows instruction "PEXH". Namely, the instruction "PEXH B, A" serves to exchange each other respective data of two fields of high order of the quartered register A, and to exchange each other respective data of two fields of low order thereof to store them into the register B.

FIG. 15C shows instruction "PROT3". Namely, the instruction "PROT3 B, A, 16" serves to allow data of the Most Significant field of the quartered register A to remain as it is and to shift, by 16 bits, respective data of three fields of low order to allow such data to undergo rotation to store them into the register B.

FIG. 15D shows instruction "PHADD". Namely, the instruction "PHADD B, A" serves to add each other respective data of two fields of high order of the quartered register A, and to add each other respective data of two fields of low order thereof to store them into the register B.

FIG. 15E shows instruction "PHSUB". Namely, the instruction "PHSUB B, A" serves to allow respective data of two fields of high order of the quartered register A to undergo subtractive processing, and to allow respective data of two fields of low order to undergo subtractive processing to store them into the register B.

As stated above, the arithmetic unit (apparatus) for carrying out the method in accordance with this invention further has, in addition to the conventional MM instructions, instruction for carrying out exchange between divided bit fields and instruction for performing operation between different bit fields within the same register to thereby improve operation performance.

The configuration of the arithmetic unit (apparatus) for carrying out the method in accordance with this invention further having new MM instructions as described above in addition to the conventional MM instructions will now be described in more practical sense.

FIG. 16 shows an example of the configuration of data exchange unit (EXC circuit) 310 of FIG. 12. Respective inputs A0 to A3 to this EXC circuit 310 are delivered to respective multiplexers (MUXs) 311 to 314. Further, the respective MUXs select data to be outputted by respective two commands delivered thereto. Thus, the operation of the EXC 310 is controlled by commands C0 to C7.

It is to be noted that while only the EXC 310 has been described here, the operation similarly applies to the EXC circuit 320.

The MUXs 311 to 314 of the above-described EXC circuits 310, 320 will now be described. These MUXs have configuration of four inputs and one output, and their operations are controlled by respective two commands.

FIG. 17 shows MUX 311 among the above-mentioned MUXs 311 to 314. This MUX 311 has configuration of four inputs and one output, and its operation is controlled by two commands C0, C1.

FIG. 18 shows correspondence relationship between two commands sent to the MUX 311 and the operation. Namely, when commands C0, C1 are both 0, input A0 is caused to be output B0. Moreover, when C0 is 0 and C1 is 1, input A1 is caused to be B0. Similarly, when C0 is 1 and C1 is 0, input A2 is caused to be output B0. In addition, when C0,C 1 are both 1, input A3 is caused to be output B0.

It is to be noted that while the MUX 311 has been described here, the operation similarly applies to MUXs 312 to 314. Namely, the operation of the MUX 312 is controlled by commands C2, C3, the operation of the MUX 313 is controlled by commands C4, C5, and the operation of the MUX 314 is controlled by commands C6, C7.

FIG. 19 shows the correspondence relationship between EXC commands C0 to C7 sent to the EXC circuit shown in FIG. 16 and MM instructions realized by these commands. Namely,

When C0, C1, C3 and C4 are 0, and C2, C5, C6 and C7 are 1, instruction "PEXC" is realized.

When C0, C2, C3 and C7 are 0, and C1, C4, C5 and C6 are 1, instruction "PEXH" is realized.

When C0, C1, C4 and C7 are 0, and C2, C3, C5 and C6 are 1, instruction "PROT3" is realized.

When C0, C2, C3 and C7 are 0, and C1, C4, C5 and C6 are 1, instruction "PHADD" is realized.

When C0, C2, C3 and C7 are 0, and C1, C4, C5 and C6 are 1, instruction "PHSUB" is realized.

It is to be noted that the above-mentioned instructions "PHADD" and "PHSUB" are the same with respect to the EXC instruction, but are different in command of ALU.

Explanation will now be given in more practical sense in connection with a circuit for realizing new MM instructions that the above-described arithmetic unit (apparatus) for carrying out the method in accordance with this invention has. In the following description, a0 to a3 are input data respectively having data width of 16 bits or 32 bits, and constitute one word as a whole. In addition, b0 to b3 are output data respectively having data width of 16 bits or 32 bits, and constitute one word as a whole.

FIG. 20 shows a circuit for realizing instruction "PEXC". This circuit is of the configuration comprising exchange circuit "exchange". With respect to four data a0, a1, a2, a3 inputted to this circuit, the Most Significant data a0 and the Least Significant data a3 are respectively outputted as b0 and b3 as they are. In addition, two data between the Most Significant data and the Least Significant data are exchanged each other, and they are outputted in the state where a1 is caused to be b2 and a2 is caused to be b1.

FIG. 21 shows a circuit for realizing instruction "PEXH". This circuit is of the configuration comprising two exchange circuits "exchange". Two data a0, a1 of high order of four data a0, a1, a2, a3 inputted to this circuit are exchanged each other, and they are outputted in the state where a0 is caused to be bland a1 is caused to be b0. In addition, two data a2, a3 of low order of the above-mentioned inputted four data are exchanged each other, and they are outputted in the state where a2 is caused to be b3 and a3 is caused to be b2.

FIG. 22 shows a circuit for realizing instruction "PROT3". In this example, "SELECT" is a selector circuit. The Most Significant data a0 of four data a0, a1, a2, a3 inputted to this circuit is outputted in the state caused to be b0 as it is. In addition, other three data a1, a2, a3 are outputted in the state where, e.g., a1 is caused to be b3, a2 is caused to be b 1 and a3 is caused to be b2 by the selector circuit "select" of three inputs and one output. Namely, the above-mentioned three data except for the Most Significant data a0 are outputted after undergone rotation.

FIG. 23 shows a circuit for realizing instruction "PHADD". This circuit is of the configuration comprising two adding circuits "ADD". Two data a0, a1 of high order of four data a0, a1, a2, a3 inputted to this circuit are added to each other, and are outputted in the state caused to be b0. In addition, two data a2, a3 of low order of the above-mentioned inputted four data are exchanged each other, and are outputted in the state caused to be b2.

FIG. 24 shows a circuit for realizing instruction "PHSUB". This circuit is of the configuration comprising two subtracting circuits "SUB". Two data a0 and a1 of high order of four data a0, a1, a2, a3 inputted to this circuit are outputted in the state where data a1 is subtracted from data a0 so that its difference is caused to be b0. In addition, two data a2 and a3 of low order of the inputted four data are outputted in the state where data a3 is subtracted from data a2 so that its difference is caused to be b2.

Explanation will now be given in connection with the case where operation is performed by the arithmetic unit (apparatus) for carrying out the method in accordance with this invention having a function to carry out exchange and/or operation (computation) of different bit fields within the same word as previously described.

FIG. 25 shows the procedure for calculating small determinant of 2x2 with respect to row vectors of 3x3 matrix by using the arithmetic unit (apparatus) of this invention.

Initially, by the previously described instruction "PEXH D, A1", two data of high order of the quartered register A1 are exchanged each other, and two data of low order thereof are exchanged each other thus to store them into register D.

Then, parallel multiplication of row vector stored in register A0 and data stored in the register D is carried out in 16 bit units by instruction "PMULH E, A0, D", and its result is stored into register E. This instruction "PMULH" is instruction for carrying out operation similar to the previously described instruction "PMUL" with only half of the word length being as unit. Thus, a01*a12 is stored into 32 bits of high order of the register E and a02*a11 is stored into 32 bits of low order thereof.

Then, parallel subtraction to subtract, from data of high order stored in the register E, data of low order stored in the register E is carried out, in 32 bit units, by instruction "PSUBW G, E", and its result is stored into register G. This instruction "PSUBW" is instruction for carrying out operation similar to operation "PSUB" with word length being as unit. Thus, 0 is stored into 32 bits of high order of the register G and a01*a12 - a02*a1l is stored into 32 bits of low order.

As stated above, in order to calculate the 2x2 determinant, with the conventional arithmetic unit (apparatus), 9 steps were required as shown in FIG. 7. On the contrary, in accordance with the arithmetic unit (apparatus) for carrying out the method in accordance with this invention, such calculation can be performed only by the above-mentioned three steps.

FIG. 26 shows the procedure for calculating outer product of two three-dimensional vectors by the arithmetic unit (apparatus) for carrying out the method in accordance with this invention.

Initially, by instruction "PROT3 B, A0, 16", the Most Significant data of register A0 is caused to be as it is and three data of low order are shifted by 16 bits to allow those data to undergo rotation to store them into register B.

Then, by instruction "PROT3 C, A1, 32", the Most Significant data of register A1 is caused to be as it is and three data of low order are shifted only by 32 bits to allow those data to undergo rotation to store them into register C.

Then, by instruction "PMUL D, B, C", parallel multiplication of row vector stored in the register B and data stored in the register C is carried out. The result thus obtained is stored into register D. Namely, 0 is stored into the Most Significant 32 bits of the register D, and a02*a11, a00*a12 and a01*a10 are stored in order into subsequent (succeeding) respective 32 bits.

Then, by instruction "PROT3 B, A0, 32", the Most Significant data of the register A0 is caused to be as it is and three data of low order are shifted only by 32 bits to allow those data to undergo rotation to store them into the register B.

Then, by instruction "PROT3 C, A1, 16", the Most Significant data of the register A1 is caused to be as it is and three data of low order are shifted only by 16 bits to allow those data to undergo rotation to store them into the register C.

Then, by instruction "PMUL E, B, C", parallel multiplication of data stored in the register B and data stored in the register C is carried out. The result thus obtained is stored into the register E. Namely, 0 is stored into the Most Significant 32 bits of the register E and a01*a12, a02*a10 and a00*a11 are stored in order into subsequent (succeeding) respective 32 bits.

Then, by instruction "PSUB F, E, D", parallel subtraction to subtract, from data stored in the register E, data stored in the register D is carried out. The result thus obtained is stored into register F. Namely, 0 is stored into the Most Significant 32 bits of the register F and a01*a12 - a02*a11, a02*a10 - a00*a12, a00*a11 - a01*a10 are stored into subsequent (succeeding) respective 32 bits.

As stated above, in order to calculate outer product of two three-dimensional vectors, 15 steps were required as shown in FIG. 9 in the conventional arithmetic apparatus. On the contrary, in accordance with the arithmetic unit (apparatus) for carrying out the method in accordance with this invention, such calculation can be performed only by the seven steps.

FIG. 27 shows the procedure for calculating inner product of two four-dimensional vectors by the arithmetic unit (apparatus) for carrying out the method in accordance with this invention.

Initially, by instruction "PMUL C, A, B", parallel multiplication of data stored in register A and data stored in register B is carried out. The result thus obtained is stored into register C. Namely, a0*b0, a1*b1, a2*b2, a3*b3 respectively consisting of 32 bits are stored into register C.

Then, by instruction "PHADD D, C", two data of high order of the register C are added to each other and two data of low order thereof are added to each other to store them into register D.

Then, instruction "PEXC E, D", the Most Significant data and the Least Significant data of the register D are caused to be as they are, and two data at the central portion therebetween are exchanged to store them into register E.

Then, by instruction "PHADD G, E", two data of high order of the register E are added to each other and two data of low order thereof are added to each other to store them into register G. Thus, a0*b0 + a1*b1 + a2*b2 + a3*b3 are stored into the Most Significant 32 bits of the register G.

In this example, the portions labeled mark x of FIG. 27 indicate that values irrelevant to this operation are stored.

As stated above, in order to calculate inner product of two four-dimensional vectors, 5 steps were required as shown in FIG. 11 in the conventional arithmetic unit (apparatus). On the contrary, in accordance with the arithmetic unit (apparatus) for carrying out the method in accordance with this invention, such a calculation can be performed only by the four steps.

FIG. 28 shows an example of the configuration of a picture preparation apparatus constituted with the arithmetic unit (apparatus) for carrying out the method in accordance with this invention having the above explained MM instructions.

In FIG. 28, a CPU1 which is Central Processing Unit comprised of microprocessor, etc. serves to take out operation information of an input device 4 such as input pad or joy stick, etc. through an interface 3 and a main bus 9, and the arithmetic unit of this invention is used for this CPU1. Further, the CPU1 sends, on the basis of the operation information thus taken out, information of three-dimensional picture stored in a main memory 2 which is first memory to a graphic processor 6 through the main bus 9.

The graphic processor 6 serves to convert sent information of three-dimensional picture to generate picture data, and three-dimensional picture by picture data generated here is depicted on a video memory 5 which is second memory. Three-dimensional picture data depicted on this video memory 5 is read out at the time of scanning of video signal. Thus, three-dimensional picture is displayed on display unit (not shown).

Moreover, simultaneously with displaying three-dimensional picture as described above, speech (sound) information corresponding to the displayed three-dimensional picture within the operation information which has been taken out by the CPU1 is sent to an audio processor 7. The audio processor 7 displays, on the basis of this sent speech information, speech data stored in an audio memory 8.

Such a picture preparation apparatus is used, e.g., in home game machines for which it is required to display three-dimensional picture with relatively high accuracy and at high speed.

In the home game machines, as a method of displaying three-dimensional picture by using a picture preparation apparatus as described above, the shading method of adding shade of object to be displayed and the texture mapping of deforming any other two-dimensional picture to paste it are representative.

Moreover, there are many instances where, as the coordinate system representing three dimensions, there are used object coordinate system for representing shape or dimension relating to three-dimensional object itself, world coordinate system indicating position of object when three-dimensional object is disposed in space, and screen coordinate system for representing three-dimensional object displayed on screen. There are many instances where particularly, polygonal area serving as unit which represents three-dimensional picture of three-dimensional object on the screen coordinate system, which is so called polygon, is dealt as simplified triangular area.

The arithmetic unit (apparatus) for carrying out the method in accordance with this invention is suitable, with respect to such triangular area (polygon), for calculating vertex coordinates, or carrying out inner product calculation, etc. of normal vector and light source vector from attribute of object and light source data.

In accordance with arithmetic apparatus as explained above, this apparatus is caused to be of the configuration further having, in addition to the conventional MM instructions, MM instructions having a function to perform operation between plural fields within the same word of operational object (object to be computed). For this reason, it is possible to perform parallel operation at a high speed by the number of steps lesser than that of the prior art.

It is to be noted that this invention is not limited to the above-described embodiments, but it is a matter of course that, e.g., the number of bits of register and/or the number of bits of field are not limited to the numbers shown.

## Claims

1. An arithmetic method for performing an arithmetic and logical operation in field units with respect to a word subject to operation, which word is constituted by plural fields each consisting of M bits, where M $\geq$ 1, the method including a step of exchanging two fields or more within the same word subject to operation, and the method being **characterised in that** an arithmetic and logical operation is carried out between the fields of the word subject to operation in which field exchange has been carried out to store a result of the operation in one of the fields subject to operation.

2. An arithmetic method according to claim 1, wherein at least one of addition and subtraction of data is carried out in said arithmetic and logical operation carried out between the fields of the word subject to operation in which field exchange has been carried out.

## Patentansprüche

1. Arithmetisches Verfahren zum Durchführen einer arithmetischen und logischen Operation in Feldeinheiten mit Bezug auf ein Wort, auf das eine Operation ausgeführt wird, wobei das Wort durch mehrere Felder gebildet ist, die jeweils aus M Bits bestehen, wobei M $\geq$ 1 ist, wobei das Verfahren einen Schritt des Austauschens von zwei oder mehr als zwei Feldern innerhalb des selben Wortes, auf das eine Operation ausgeführt wird, umfasst, wobei das Verfahren **dadurch gekennzeichnet ist, dass** eine arithmetische und logische Operation zwischen denjenigen Feldern des Wortes, auf das die Operation durchgeführt wird, durchgeführt wird, in denen das Austauschen von Feldern ausgeführt worden ist, so dass ein Ergebnis der Operation in einem der Felder, auf das die Operation ausgeführt wird, gespeichert wird.

2. Arithmetisches Verfahren nach Anspruch 1, wobei eine Addition und/oder eine Subtraktion von Daten in der arithmetischen und logischen Operation zwischen denjenigen Feldern des Wortes, auf das eine Operation ausgeführt wird, durchgeführt wird, in denen das Austauschen von Feldern durchgeführt worden ist.

## Revendications

1. Procédé arithmétique pour effectuer une opération arithmétique et logique dans des unités de champs par rapport à un mot soumis à une opération, lequel mot est constitué d'une pluralité de champs composés chacun de M bits, où M $\geq$ 1, le procédé comprenant une étape consistant à échanger deux champs ou davantage, à l'intérieur du même mot soumis à l'opération, et le procédé étant **caractérisé en ce qu'**une opération arithmétique et logique est effectuée entre les champs du mot soumis à l'opération, dans lequel un échange de champs a été effectué pour stocker un résultat de l'opération dans l'un des champs soumis à l'opération.

2. Procédé arithmétique selon la revendication 1, dans lequel au moins une addition ou une soustraction de données est effectuée dans ladite opération arithmétique et logique effectuée entre les champs du mot soumis à une opération, dans lequel l'échange de champs a été effectué.

170    160    64bitBUS

64

130    ALU    REG    ~150

140~ SHT

64bitBUS

64bitBUS

~180

# FIG.1

A
63                                    0
┌─────────────────────────────────────┐
│                  s                   │
└─────────────────────────────────────┘

✳

B
63                                    0
┌─────────────────────────────────────┐
│                  t                   │
└─────────────────────────────────────┘

↓

C
127                                                           0
┌───────────────────────────────────────────────────────────┐
│                          s ✳ t                              │
└───────────────────────────────────────────────────────────┘

**FIG.2**

EP 0 930 564 B1

A

| 63 | 48 | 47 | 32 | 31 | 16 | 15 | 0 |
|---|---|---|---|---|---|---|---|
| s3 | | s2 | | s1 | | s0 | |

* * * *

B

| 63 | 48 | 47 | 32 | 31 | 16 | 15 | 0 |
|---|---|---|---|---|---|---|---|
| t3 | | t2 | | t1 | | t0 | |

C

| 127 | 96 | 95 | 64 | 63 | 32 | 31 | 0 |
|---|---|---|---|---|---|---|---|
| s3✳t3 | | s2✳t2 | | s1✳t1 | | s0✳t0 | |

**FIG.3**

EP 0 930 564 B1

A
127                                                                 0

$s$

$+$

B
127                                                                  0

$t$

$\downarrow$

C
127                                                                  0

$s+t$

# FIG.4

FIG.5

```
        63    48 47    32 31    16 15      0
A0    [    0    |  a00  |  a01  |  a02  ]

        63    48 47    32 31    16 15      0
A1    [    0    |  a10  |  a11  |  a12  ]

        63    48 47    32 31    16 15      0
A2    [    0    |  a20  |  a21  |  a22  ]
```

## FIG.6

```
                                      63    48 47    32 31    16 15      0
                              A0    [    0    |  a00  |  a01  |  a02  ]

                                      63    48 47    32 31    16 15      0
                              A1    [    0    |  a10  |  a11  |  a12  ]

                                      63    48 47    32 31    16 15      0
SRL   B,A1,16               B    [    0    |    0    |  a10  |  a11  ]

ANDI  B,0x000000000000ffff  B    [    0    |    0    |    0    |  a11  ]

SLL   C,A1,16               C    [  a10  |  a11  |  a12  |    0    ]

ANDI  C,0x00000000ffff0000  C    [    0    |    0    |  a12  |    0    ]

OR    D,B,C                 D    [    0    |    0    |  a12  |  a11  ]

PMUL  E,A0,D                E    [   a01*a12   |   a02*a11   ]

SRL   F,E,32                F    [      0      |   a01*a12   ]

ANDI  E,0x00000000ffffffff  E    [      0      |   a02*a11   ]

SUB   G,F,E                 G    [      0      | a01*a12−a02*a11 ]
```

## FIG.7

|  | 63 | 48 | 47 | 32 | 31 | 16 | 15 | 0 |
|---|---|---|---|---|---|---|---|---|
| A0 | 0 | | $a_{00}$ | | $a_{01}$ | | $a_{02}$ | |

|  | 63 | 48 | 47 | 32 | 31 | 16 | 15 | 0 |
|---|---|---|---|---|---|---|---|---|
| A1 | 0 | | $a_{10}$ | | $a_{11}$ | | $a_{12}$ | |

# FIG.8

|  | 63  48 | 47  32 | 31  16 | 15  0 |
|---|---|---|---|---|
| A0 | 0 | $a_{00}$ | $a_{01}$ | $a_{02}$ |
| A1 | 0 | $a_{10}$ | $a_{11}$ | $a_{12}$ |

SRL B,A0,16

| B | 0 | 0 | $a_{00}$ | $a_{01}$ |
|---|---|---|---|---|

SLL C,A0,32

| C | $a_{01}$ | $a_{02}$ | 0 | 0 |
|---|---|---|---|---|

OR D,B,C

| D | $a_{01}$ | $a_{02}$ | $a_{00}$ | $a_{01}$ |
|---|---|---|---|---|

SLL E,A1,16

| E | $a_{10}$ | $a_{11}$ | $a_{12}$ | 0 |
|---|---|---|---|---|

SRL F,A1,32

| F | 0 | 0 | 0 | $a_{10}$ |
|---|---|---|---|---|

OR G,E,F

| G | $a_{10}$ | $a_{11}$ | $a_{12}$ | $a_{10}$ |
|---|---|---|---|---|

PMUL H,D,G

| | 127  96 | 95  64 | 63  32 | 31  0 |
|---|---|---|---|---|
| H | $a_{01} \ast a_{10}$ | $a_{02} \ast a_{11}$ | $a_{00} \ast a_{12}$ | $a_{01} \ast a_{10}$ |

SLL B,A0,16

| B | $a_{00}$ | $a_{01}$ | $a_{02}$ | 0 |
|---|---|---|---|---|

SRL C,A0,32

| C | 0 | 0 | 0 | $a_{00}$ |
|---|---|---|---|---|

OR D,B,C

| D | $a_{00}$ | $a_{01}$ | $a_{02}$ | $a_{00}$ |
|---|---|---|---|---|

SRL E,A1,16

| E | 0 | 0 | $a_{10}$ | $a_{11}$ |
|---|---|---|---|---|

SLL F,A1,32

| F | $a_{11}$ | $a_{12}$ | 0 | 0 |
|---|---|---|---|---|

OR G,E,F

| G | $a_{11}$ | $a_{12}$ | $a_{10}$ | $a_{11}$ |
|---|---|---|---|---|

PMUL H,D,G

| | 127  96 | 95  64 | 63  32 | 31  0 |
|---|---|---|---|---|
| J | $a_{00} \ast a_{11}$ | $a_{01} \ast a_{12}$ | $a_{02} \ast a_{10}$ | $a_{00} \ast a_{11}$ |

PSUB K,J,H

| | 127  96 | 95  64 | 63  32 | 31  0 |
|---|---|---|---|---|
| K | $a_{00} \ast a_{11} - a_{01} \ast a_{10}$ | $a_{01} \ast a_{12} - a_{02} \ast a_{11}$ | $a_{02} \ast a_{10} - a_{00} \ast a_{12}$ | $a_{00} \ast a_{11} - a_{01} \ast a_{10}$ |

# FIG.9

**FIG.10**

**FIG.11**

# FIG.12

**FIG.13**

EP 0 930 564 B1

**FIG.14A**

$$\begin{array}{c|c|c|c|c} & 63 \quad 48 & 47 \quad 32 & 31 \quad 16 & 15 \quad 0 \\ A & a_0 & a_1 & a_2 & a_3 \end{array}$$

$$B \quad \begin{array}{|c|c|c|c|} \hline b_0 & b_1 & b_2 & b_3 \\ \hline \end{array}$$

**FIG.14B**

PMUL        C,A,B

$$\begin{array}{c|c|c|c|c} & 127 \quad\quad 96 & 95 \quad\quad 64 & 63 \quad\quad 32 & 31 \quad\quad 0 \\ C & a_0 * b_0 & a_1 * b_1 & a_2 * b_2 & a_3 * b_3 \end{array}$$

**FIG.14C**

PADD        C,A,B        $C \quad \begin{array}{|c|c|c|c|} \hline a_0+b_0 & a_1+b_1 & a_2+b_2 & a_3+b_3 \\ \hline \end{array}$

PEXC  B,A   A

| $a_0$ | $a_1$ | $a_2$ | $a_3$ |
|---|---|---|---|

B

| $a_0$ | $a_2$ | $a_1$ | $a_3$ |
|---|---|---|---|

## FIG.15A

PEXH  B,A   A

| $a_0$ | $a_1$ | $a_2$ | $a_3$ |
|---|---|---|---|

B

| $a_1$ | $a_0$ | $a_3$ | $a_2$ |
|---|---|---|---|

## FIG.15B

PROT3  B,A,16  A

| $a_0$ | $a_1$ | $a_2$ | $a_3$ |
|---|---|---|---|

B

| $a_0$ | $a_3$ | $a_1$ | $a_2$ |
|---|---|---|---|

## FIG.15C

PHADD  B,A   A

| $a_0$ | $a_1$ | $a_2$ | $a_3$ |
|---|---|---|---|

B

| $a_0+a_1$ | | $a_2+a_3$ | |
|---|---|---|---|

## FIG.15D

PHSUB  B,A   A

| $a_0$ | $a_1$ | $a_2$ | $a_3$ |
|---|---|---|---|

B

| $a_0-a_1$ | | $a_2-a_3$ | |
|---|---|---|---|

## FIG.15E

**FIG.16**

**FIG.17**

| COMMAND | | OUTPUT |
| --- | --- | --- |
| C0 | C1 | B0 |
| 0 | 0 | A0 |
| 0 | 1 | A1 |
| 1 | 0 | A2 |
| 1 | 1 | A3 |

**FIG.18**

| EXC COMMAND | | | | | | | | MM |
| --- | --- | --- | --- | --- | --- | --- | --- | --- |
| C0 | C1 | C2 | C3 | C4 | C5 | C6 | C7 | INSTRUCTION |
| 0 | 0 | 1 | 0 | 0 | 1 | 1 | 1 | PEXC |
| 0 | 1 | 0 | 0 | 1 | 1 | 1 | 0 | PEXH |
| 0 | 0 | 1 | 1 | 0 | 1 | 1 | 0 | PROT3 |
| 0 | 1 | 0 | 0 | 1 | 1 | 1 | 0 | PHADD |
| 0 | 1 | 0 | 0 | 1 | 1 | 1 | 0 | PHSUB |

**FIG.19**

a0 ──────────────────────────────────→ b0

exchange

a1 ───────────→ ⤮ ───────────→ b1

a2 ───────────→ ⤮ ───────────→ b2

a3 ──────────────────────────────────→ b3

# FIG.20

exchange

a0 ───────────→ ⤮ ───────────→ b0

a1 ───────────→ ⤮ ───────────→ b1

a2 ───────────→ ⤮ ───────────→ b2

a3 ───────────→ ⤮ ───────────→ b3

# FIG.21

**FIG.22**

**FIG.23**

**FIG.24**

**FIG.25**

|  | 63 | 48 | 47 | 32 | 31 | 16 | 15 | 0 |
|---|---|---|---|---|---|---|---|---|
| A0 | 0 |  | $a_{00}$ |  | $a_{01}$ |  | $a_{02}$ |  |

|  | 63 | 48 | 47 | 32 | 31 | 16 | 15 | 0 |
|---|---|---|---|---|---|---|---|---|
| A1 | 0 |  | $a_{10}$ |  | $a_{11}$ |  | $a_{12}$ |  |

PROT3 B,A0,16

|  | 63 | 48 | 47 | 32 | 31 | 16 | 15 | 0 |
|---|---|---|---|---|---|---|---|---|
| B | 0 |  | $a_{02}$ |  | $a_{00}$ |  | $a_{01}$ |  |

PROT3 C,A1,32

|  | 63 | 48 | 47 | 32 | 31 | 16 | 15 | 0 |
|---|---|---|---|---|---|---|---|---|
| C | 0 |  | $a_{11}$ |  | $a_{12}$ |  | $a_{10}$ |  |

PMUL D,B,C

|  | 127 | 96 | 95 | 64 | 63 | 32 | 31 | 0 |
|---|---|---|---|---|---|---|---|---|
| H | 0 |  | $a_{02} * a_{11}$ |  | $a_{00} * a_{12}$ |  | $a_{01} * a_{10}$ |  |

PROT3 B,A0,32

|  | 127 | 96 | 95 | 64 | 63 | 32 | 31 | 0 |
|---|---|---|---|---|---|---|---|---|
| B | 0 |  | $a_{01}$ |  | $a_{02}$ |  | $a_{00}$ |  |

PROT3 C,A1,16

|  | 127 | 96 | 95 | 64 | 63 | 32 | 31 | 0 |
|---|---|---|---|---|---|---|---|---|
| C | 0 |  | $a_{12}$ |  | $a_{10}$ |  | $a_{11}$ |  |

PMUL E,B,C

|  | 127 | 96 | 95 | 64 | 63 | 32 | 31 | 0 |
|---|---|---|---|---|---|---|---|---|
| E | 0 |  | $a_{01} * a_{12}$ |  | $a_{02} * a_{10}$ |  | $a_{00} * a_{11}$ |  |

PSUB F,E,D

|  | 127 | 96 | 95 | 64 | 63 | 32 | 31 | 0 |
|---|---|---|---|---|---|---|---|---|
| F | $a_{00} * a_{11}$ |  | $a_{01} * a_{12} - a_{02} * a_{11}$ |  | $a_{02} * a_{10} - a_{00} * a_{12}$ |  | $a_{00} * a_{11} - a_{01} * a_{10}$ |  |

## FIG.26

FIG.27

**FIG.28**